# EUROPEAN PATENT APPLICATION

(11) **EP 4 564 987 A1**
(43) Date of publication of application: **04.06.2025**
(21) Application number: 23846935.7
(22) Date of filing: 24.07.2023
(51) Int. Cl.: H04W 76/11, H04W 76/15, H04W 24/02

(54) **COMMUNICATION RELATED TO REDUNDANT PDU SESSION**

(30) Priority: 25.07.2022 US 202263391805 P
(71) Applicant: LG Electronics Inc., Yeongdeungpo-gu Seoul 07336 (KR)
(72) Inventor: KIM, Seokjung, Seoul 06772 (KR); KIM, Laeyoung, Seoul 06772 (KR); YOUN, Myungjune, Seoul 06772 (KR); BYUN, Daewook, Seoul 06772 (KR)
(74) Representative: Frenkel, Matthias Alexander
(86) International application number: PCT/KR2023/010636
(87) International publication number: WO 2024/025276

(57) **Abstract**

One disclosure of the present specification provides a method by which an SMF performs communication. The method may comprise the steps of: receiving a message for requesting establishment of a PDU session; transmitting an analysis request message to an NWDAF; receiving, from the NWDAF, an analysis response message including analysis information related to an RSN value; determining an RSN value for the PDU session; and transmitting, to an NG-RAN, a PDU session resource setup request message.

## Description

### TECHNICAL FIELD

The present specification relates to a mobile communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

A plurality of PDU sessions are being discussed to support redundant delivery. However, the prior art has a problem that it is impossible establish disjoint User Plane (UP) paths for the plurality of PDU sessions.

### DISCLOSURE

### TECHNICAL SOLUTION

In one aspect, a method is provided for an SMF to perform communication. The method may include: receiving a PDU session establishment request message; sending an analytics request message to an NWDAF; receiving an analytics response message from the NWDAF comprising analytics information related to an RSN value; determining an RSN value for the PDU session; and sending a PDU session resource establishment request message to an NG-RAN.

In another aspect, an apparatus implementing the method is provided.

In one aspect, a method of performing a communication by a UE is provided. The method may include: transmitting a PDU session establishment request message to an SMF to request establishment of a PDU session for redundant transmission; and receiving a PDU session establishment acceptance message from the SMF.

In another aspect, an apparatus implementing the method is provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIGS. 5 and 6 show an example of a PDU session establishment procedure to which implementations of the present disclosure is applied.
FIG. 7 illustrates an example of an end-to-end redundant user plane path.
FIG. 8 illustrates an example of establishing a PDU session for redundant transmission on one NG-RAN, according to one embodiment of the present disclosure.
FIG. 9 illustrates an example of establishing a PDU session for redundant transmission on two NG-RANs, according to one embodiment of the present disclosure.
FIG. 10 illustrates a procedure according to a first example of the disclosure.
FIG. 11 illustrates a procedure according to a second example of the disclosure.
FIG. 12 illustrates a procedure according to a third example of the disclosure.
FIGS. 13a and 13b illustrate a procedure according to a fourth example of the disclosure.
FIG. 14 illustrates an example of a procedure according to one embodiment of the disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

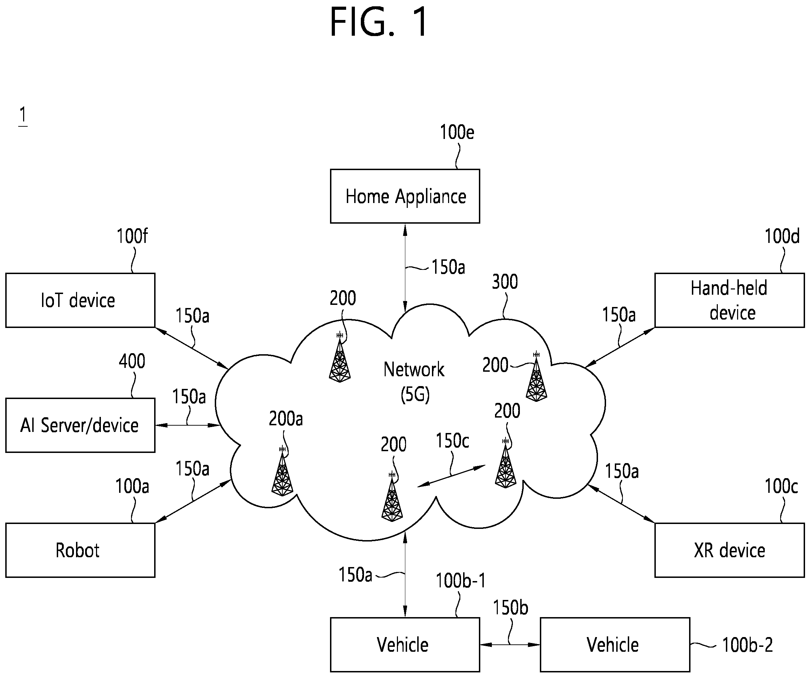

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the-mentioned names. Additionally and/or alternatively, the radio communication technologies implemented in the wireless devices in the present disclosure may include at least one of ZigBee, Bluetooth, and/or LPWAN which take into account low-power communication, and may not be limited to the-mentioned names. For example, ZigBee technology may generate Personal Area Networks (PANs) related to small/low-power digital communication based on various specifications such as IEEE 802.15.4 and may be called various names.

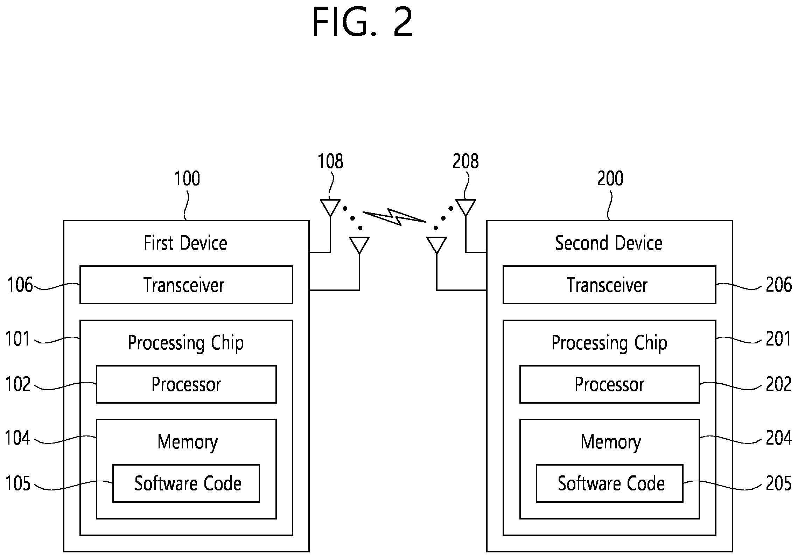

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

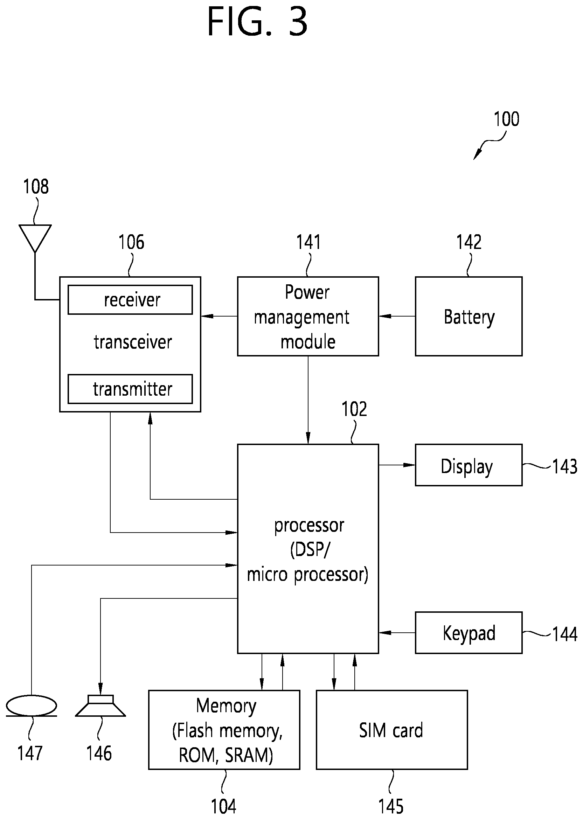

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information related to many SIM cards.

The speaker 146 outputs sound-related results processed by the processor 102. The microphone 147 receives sound-related inputs to be used by the processor 102.

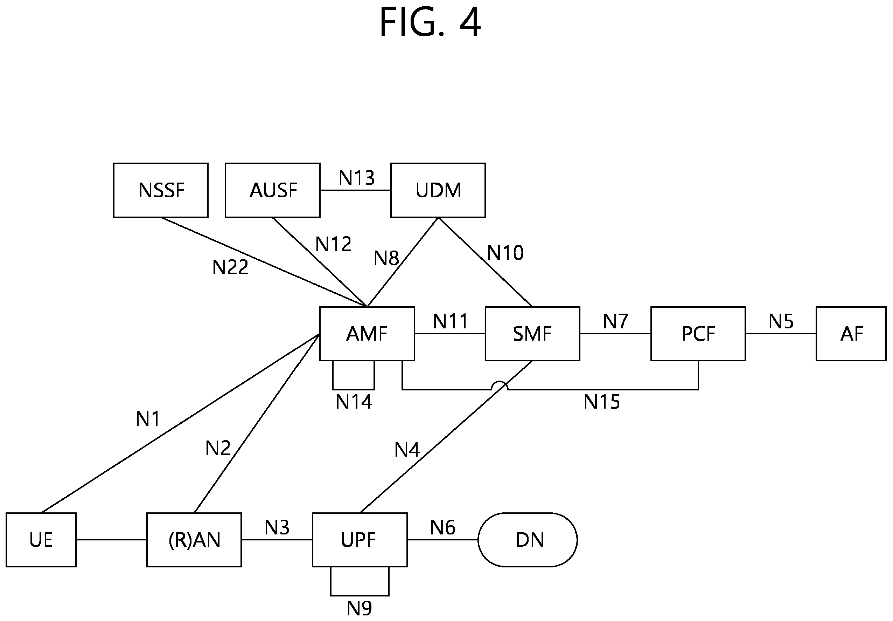

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

PDU session establishment procedure is described. Section 4.3.2 of 3GPP TS 23.502 V16.3.0 (2019-12) can be referenced.

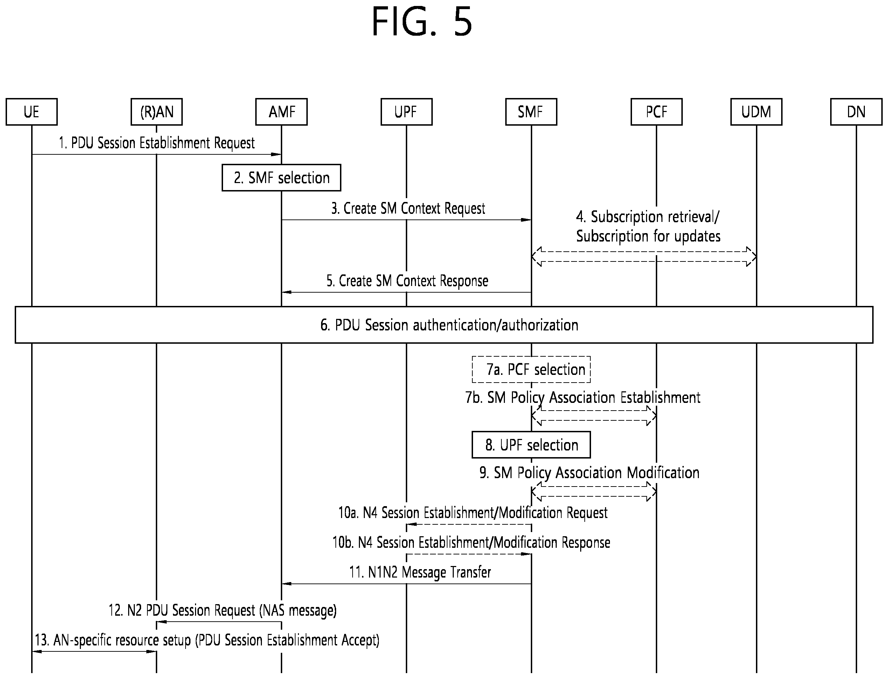

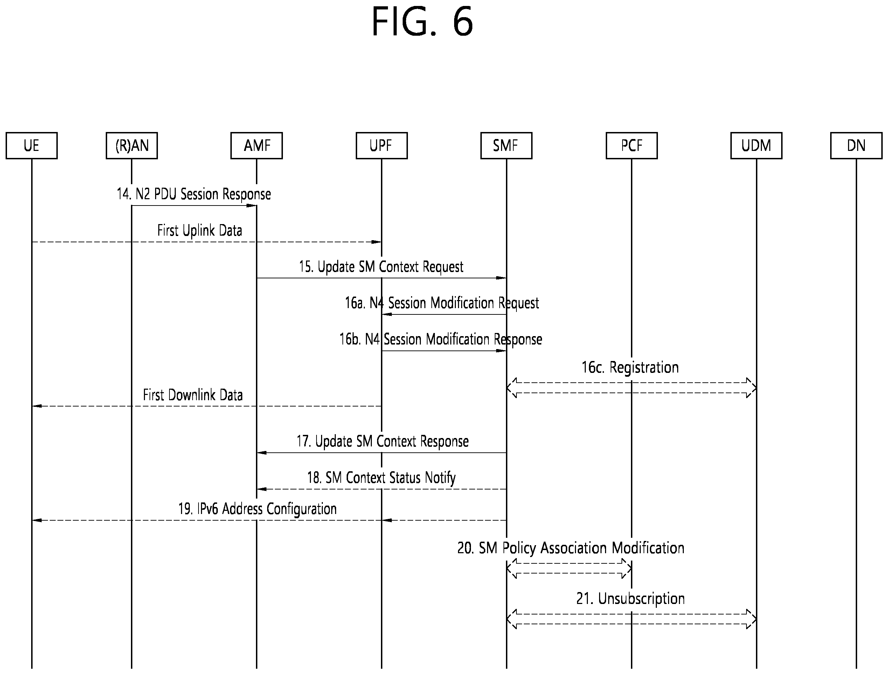

**FIGS. 5** **and** **6** **show an example of a PDU session establishment procedure to which implementations of the present disclosure is applied.**

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 5 and 6 specify the procedures for establishing PDU sessions associated with a single access type at a given time.

The procedure shown in FIGS. 5 and 6 assumes that the UE has already registered on the AMF thus unless the UE is emergency registered the AMF has already retrieved the user subscription data from the UDM.

First, procedures of FIG. 5 are described.
(1) Step 1: In order to establish a new PDU session, the UE generates a new PDU session ID.

The UE initiates the UE requested PDU session establishment procedure by the transmission of a NAS message including a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also included in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN;
- the SMF ID corresponding to the PDU session ID belongs to the HPLMN;

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container including the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information related to the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required(or Mandatory)", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message including the PDU Session Establishment Reject message to the UE. In this case, steps 12-17 are skipped.

(12) Step 12: The AMF sends the NAS message including PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 6, which follow the procedures of FIG. 5, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

An example of a redundant transmission is described.

As an example of higher layer multi-connectivity, redundant transmission may be used. Redundant transmission may be applied to the user plane path between the UE and the network for URLLC services.

Describes an example of a redundant user plane path based on dual connectivity.

The UE may initiate two redundant PDU sessions over the 5G network. The 5GS may set the user plane paths of the two redundant PDU sessions to be separated. Upon initiation of PDU session establishment or PDU session modification, the RAN may ensure separated user plane paths by establishing redundant connections on one NG-RAN node or two NG-RAN nodes for the two redundant PDU sessions, depending on the redundancy information received from the 5GC. The RAN needs to ensure that the resources of the data radio bearer for the two redundant PDU sessions are isolated. If the RAN is unable to meet the separate user plane requirements, the redundant PDU sessions may or may not be maintained depending on the RAN local configuration. In case of handover, redundancy information is sent to the target NG-RAN node.

For high-reliability communication, redundant transmissions may be used. Describes an end-to-end redundant user plane path based on dual connectivity.

To support high reliability URLLC services, the UE may establish two redundant PDU sessions over the 5G network. The 5GS can ensure that the user plane paths of the two redundant PDU sessions are separated. The user's subscription indicates whether the redundant PDU session is allowed for the user, and this indication is provided in the UDM to SMF.

NOTE: The following redundant network deployment aspects are subject to operator implementation:
- The core network UPF deployment is aligned with the RAN deployment and supports redundant user plane paths.
- In addition, the physical network topology and geographic distribution of functions support redundant user plane paths to the extent deemed necessary by the operator.
- The operation of redundant user plane paths is sufficiently independent to the extent deemed necessary by the operator (e.g., independent power supplies).

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

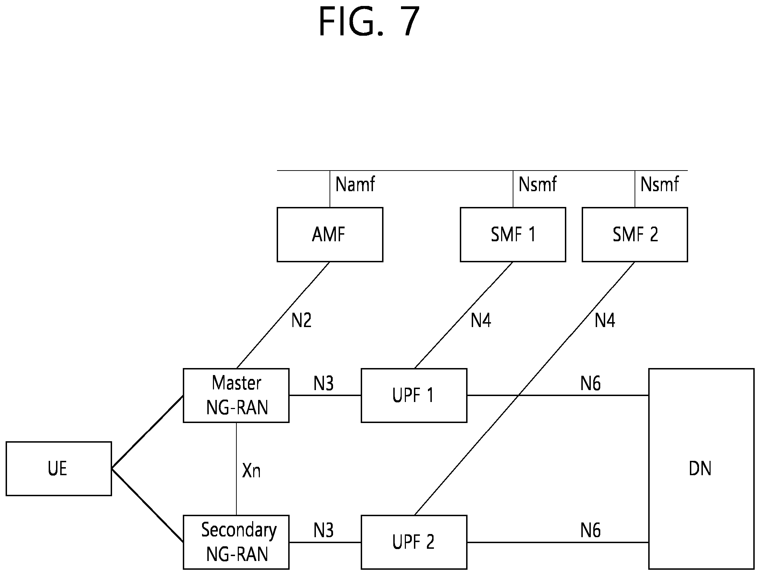

FIG. 7 illustrates an example of an end-to-end redundant user plane path.

FIG. 7 shows an example of a user plane resource setup for a dual PDU session with redundancy applied. One PDU session spans UPF1, which acts as a PDU session anchor at the UE over the master NG-RAN, and the other PDU session spans UPF2, which acts as a PDU session anchor at the UE over the secondary NG-RAN. The NG-RAN can implement redundant user plane resources for two PDU sessions using two NG-RAN nodes (e.g., the master NG-RAN and secondary NG-RAN shown in Figure 7) or a single NG-RAN node. In either case, there is a single N1 interface facing the AMF.

Based on these two PDU sessions, two independent user plane paths are established. Although traffic through UPF1 and UPF2 can be routed through different user plane nodes within the DN, UPF1 and UPF2 are connected to the same Data Network (DN).

Support for redundant PDU sessions may include the following examples
- The UE may initiate two redundant PDU sessions and provide a PDU session pair ID (optional) and an RSN (optional). Within a given redundant PDU session pair, different combinations of RSN, DNN and S-NSSAI are used for each PDU session. Between different pairs of redundant PDU sessions, different combinations of PDU session pair ID, DNN, and S-NSSAI are used.
- The UE may include the PDU session pair ID and/or RSN in each PDU session establishment request when establishing redundant PDU sessions. The UE may determine the PDU session pair ID and/or RSN according to the UE local mechanism or the matching URSP rules.
- The SMF determines whether to treat the PDU session as redundant. This determination is performed based on whether the PDU session pair ID and/or RSN is present in the PDU session establishment request. Or, if dynamic PCC is applied to the PDU session, this determination is performed based on the indication that a redundant PDU session is required provided by the PCF for the PDU session. Or, if dynamic PCC is not used for the PDU session, this determination is performed by the SMF based on a combination of S-NSSAI, DNN, user subscription, and local policy configuration. If the PDU session must be treated as redundant and the PDU session pair ID is not included in the PDU session establishment request, the SMF may use S-NSSAI, DNN, and local settings to determine the PDU session pair ID. If the PDU session needs to be handled redundantly and the RSN is not included in the PDU session establishment request, the SMF may use S-NSSAI, DNN, and local configuration to determine the RSN value. The RSN distinguishes the PDU session to be handled redundantly and indicates the redundant user plane requirements for the PDU session in the NG-RAN.
- The SMF may provide the RSN and PDU session pair ID to the NG-RAN for redundant PDU sessions.
- The carrier setting in UPF selection can ensure proper UPF selection for disjoint paths.
- When a PDU session is established or when the UE transitions to the CM-CONNECTED state, the RSN parameter informs the NG-RAN that redundant user plane resources should be provided for a given PDU session via redundant connections. The PDU session pair ID identifies two redundant PDU sessions that belong together. The value of the RSN parameter and the PDU Session Pair ID indicates the redundant user plane requirement for the PDU session. The request for such redundant handling can be fulfilled by indicating the RSN to the NG-RAN node on a per PDU session basis. PDU sessions related to different RSN values should be realized by different redundant UP resources. Based on the RSN, PDU session pair ID, and RAN settings, the NG-RAN establishes a redundant connection so that the session has an end-to-end redundant path. If there are multiple PDU sessions with RSN parameter set, different RSN values and the same PDU session pair ID, this informs the NG-RAN that the CN is requesting to establish a redundant connection and the user plane may be treated as indicated in the RSN parameter, PDU session pair ID and the associated RAN configuration. If the RSN value and PDU session pair ID are provided to the NG-RAN, the NG-RAN may consider the RSN value and PDU session pair ID when associating the PDU session with the NG-RAN UP.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

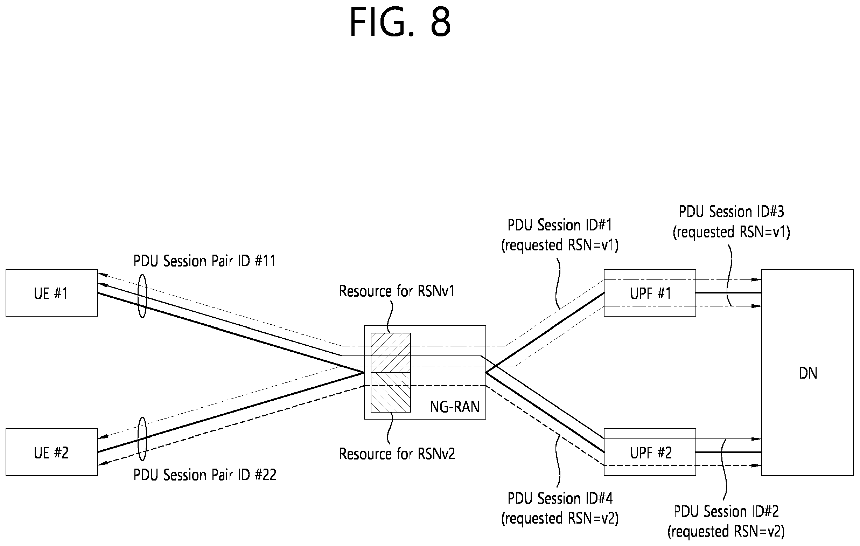

FIG. 8 illustrates an example of establishing a PDU session for redundant transmission on one NG-RAN, according to one embodiment of the present disclosure.

Referring to FIG. 8, an example of PDU sessions being established for PDU session IDs #1 through #4 is shown.

In the example of FIG. 8, a resource for RSNv1 and a resource for RSNv2 in the NG-RAN are shown. For PDU Session ID#1, requested RSN=v1, Used RSN=v1, i.e., the requested RSN is v1 and the used RSN is also set to v1. For PDU Session ID#2, requested RSN=v2, Used RSN=v1. For PDU Session ID#3, requested RSN=v1, Used RSN=v1. For PDU Session ID#4, requested RSN=v2, Used RSN=v2.

For PDU Session ID#2, the SMF may have requested RSN = v2 for PDU Session ID#2. However, due to the load situation of the resource for RSN = v2 or for other reasons, the NG-RAN may decide to allocate (or set) RSN = v1 for PDU Session ID#2. Therefore, PDU Session ID#1 and PDU Session ID#2 belonging to PDU Session Pair ID#11 utilize the same resource. This causes the allocatement (or setting) of disjoint UP paths to fail for PDU Session Pair ID#11.

On the other hand, for PDU Session ID#3 and PDU Session ID#4 included in PDU Session Pair ID#22, even within the same NG-RAN, the disjoint UP paths allocation (or establishment) can be successful because they utilize different resources (e.g., one for RSN v1, one for RSN v2).

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

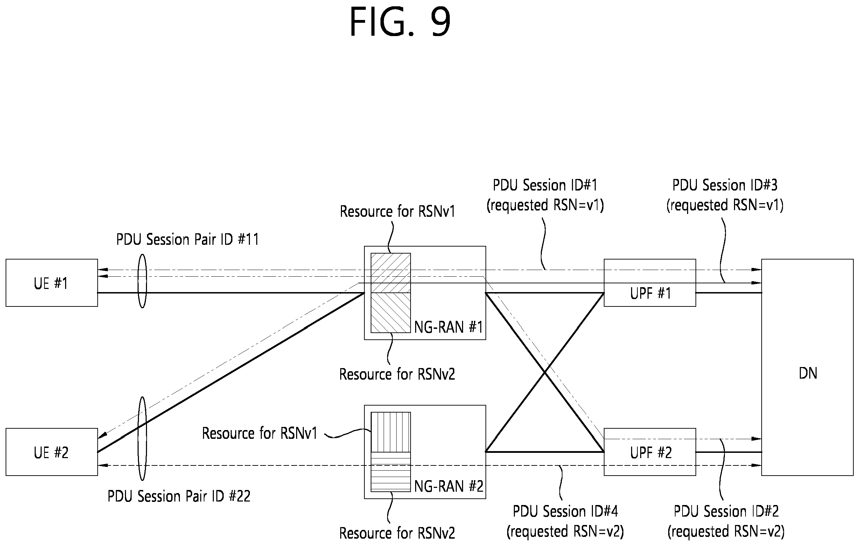

FIG. 9 illustrates an example of establishing a PDU session for redundant transmission on two NG-RANs, according to one embodiment of the present disclosure.

Referring to the example of FIG. 9, an example is shown where PDU sessions are established for PDU session IDs #1 through #4 on two NG-RANs (e.g., NG-RAN #1 and #2).

In the example of FIG. 9, resources for RSNv1 and resources for RSNv2 in NG-RAN#1 are shown. Also, resources for RSNv1 and resources for RSNv2 in NG-RAN#2 are shown. For PDU Session ID#1, requested RSN=v1, Used RSN=v1. For example, the requested RSN was v1 and the used RSN was also set to v1. For PDU Session ID#2, requested RSN=v2, Used RSN=v1. For PDU Session ID#3, requested RSN=v1, Used RSN=v1. For PDU Session ID#4, requested RSN=v2, Used RSN=v2.

PDU Session Pair ID#11 failed to allocate/set Disjoint UP paths. Unlike PDU Session Pair ID#11, PDU Session ID#3 and PDU Session ID#4 included in PDU Session Pair ID#22 can utilize resources from different NG-RANs, so the disjoint UP paths allocation/configuration succeeded.

Redundant transmission based on dual connectivity needs to be supported. For example, it may be discussed to include the PDU Session Pair ID in the PDU Session Establishment Request message in order for the terminal to create a PDU Session for redundant transmission.

The UE may have knowledge of the PDU session pair information for redundant PDU sessions. In this case, the UE may provide the PDU session pair information to the SMF, so that the SMF can provide this information to the NG-RAN. By providing this information to the NG-RAN, the SMF may ultimately use this information for SN selection or gNB CU/DU selection. This way, two PDU sessions can be established independently without any constraints on the selected SMF.

If the UE releases one of the redundant PDU sessions and establishes a third PDU session, the PDU session pair information may be used for coordination with the newly established PDU session.

It also needs to be clarified how the UE obtains PDU session pair information for redundant PDU sessions.

NG-RAN can now receive RSN and PDU Session Pair ID values from SMF for PDU Session for redundant transmission. However, there is still a problem that NG-RAN may fail to allocate/set Disjoint UP Path for two PDU Sessions for redundant transmission.

To solve this problem, SMF needs to allocate/set the RSN value for PDU Session for redundant transmission well and transmit it to NG-RAN. To this end, the present disclosure proposes an operation that delivers the result of NWDAF's analytics to the SMF based on the RSN value finally allocated/set by the NG-RAN for a PDU Session with a specific DNN and S-NSSAI combination. Furthermore, the present disclosure proposes a method for the SMF to set/allocate the RSN for a PDU Session for redundant transmission based on NWDAF's analytics.

Various examples of the disclosure describe methods for supporting the NG-RAN to create a disjoint UP Path for a PDU Session (hereinafter referred to as a Redundant PDU Session) of a particular DNN and S-NSSAI combination for redundant transmission based on dual connectivity. For example, for this purpose, operations where the SMF requests analytics on End-to-End Redundant Transmission Experience from the NWDAF may be proposed, so that the SMF can determine the appropriate RSN value. Furthermore, based on the analytics, the SMF can allocate/set a new RSN value and communicate it to the NG-RAN. Based on this RSN value, the NG-RAN may perform the operatioins of allocating a Disjoint UP path for the PDU Session.

Hereinafter, in various examples of the disclosure, the End-to-End Redundant Transmission Experience Analytics may be the result of the NWDAF predicting (or analyzing) the RSN value that should be allocated for a newly created Redundant PDU Session. For example, the NWDAF may perform the analytics based on the Requested RSN value allocated/set by the SMF (e.g., the Requested RSN value allocated/set by the SMF in the past during the creation of a Redundant PDU Session with a particular DNN and S-NSSAI combination) and the Used RSN value actually allocated/set by the NG-RAN to configure the Disjoint UP path. End-to-End Redundant Transmission Experience Analytics may be the result of NWDAF's prediction of the RSN values that should be allocated for newly created Redundant PDU Sessions in the future based on these Requested RSN values and Used RSN values.

In the various examples disclosed herein, the various proposed behaviors may be applied only when the terminal does not provide PDU Session Pair ID and/or RSN information in the SMF. Alternatively, these behaviors may apply only when the terminal provides the PDU Session Pair ID and/or RSN information in SMF, or in both cases.

Service operations between Core NFs are described in various examples throughout this specification. For some of these service operations, new service operations may be defined and used. Also, for some of the NG messages between the AMF and the NG-RAN described below, new NG messages may be defined and used. Also, for some of the RRC messages between the NG-RAN and the terminal described below, new RRC messages may be defined and used.

In the procedures described in the various examples of the disclosure, the order in which the steps are shown in the drawings is illustrative only; accordingly, any of the following steps may be performed simultaneously/parallel or in an alternate order from that shown in the drawings.

The names of indications or parameter information suggested in the various examples of the disclosure are for illustrative purposes only; accordingly, other names may be used for indications or parameter information for the procedures/purposes/methods suggested in the various examples of the disclosure.

For NWDAF related operation, see 3GPP TS 23.288 V17.5.0 for the same operation as conventional operation, and this specification describes NWDAF related operation with emphasis on the proposed operation described in the various examples in the present disclosure.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

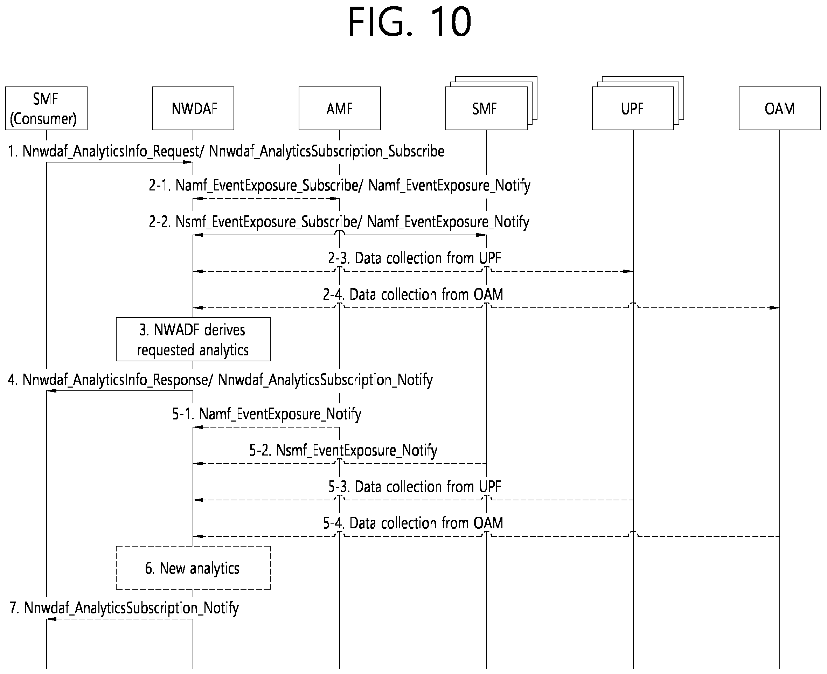

**FIG. 10** **illustrates a procedure according to a first example of the disclosure.**

For example, FIG. 10 is an example of a procedure for End-to-End Redundant Transmission Experience Analytics.

The example in FIG. 10 includes operation where the Consumer SMF receives End-to-End Redundant Transmission Experience Analytics from the NWDAF before determining the RSN value for the Redundant PDU Session.

Step 1: The Consumer SMF may send a request message or a subscription message to the NWDAF. For example, the Consumer SMF may send Nnwdaf_AnalyticsInfo_Request or Nnwdaf_AnalyticsSubscription_Subscribe messages to the NWDAF. By sending these messages, the Consumer SMF may request Analytics results from the NWDAF to use when the Consumer SMF determines the RSN for the Redundant PDU Session. The SMF may determine or select the RSN when establishing a Redundant PDU Session, when modifying a Redundant PDU Session, when activating the user plane of a Redundant PDU Session, etc.

When the Consumer SMF sends a message to the NWDAF, the Consumer SMF may additionally provide the NWDAF with some or all of the information shown in the following examples. For example, the Consumer SMF may send an Nnwdaf_AnalyticsInfo_Request or Nnwdaf_AnalyticsSubscription_Subscribe message that includes some or all of the information shown in the following examples. Note that this information may be provided explicitly, implicitly, implicitly, or in combination. For conventional input parameters that are included when a Consumer SMF requests analytics data from the NWDAF, see clause 6.1.3 (Contents of Analytics Exposure) of 3GPP TS 23.288 V17.5.0. When the Consumer SMF sends a message to the NWDAF, the Consumer SMF may additionally provide the NWDAF with one or more of the following examples of information
- Analytics ID = "End-to-End Redundant Transmission Experience" requested by the Consumer SMF: The Analytics ID names are examples, and other names may be used.
- DNN and S-NSSAI related to that PDU Session
- QoS information related to the PDU Session
- The RSN and/or PDU Session Pair ID that the terminal included in the PDU Session Establishment Request message for the PDU Session.
- The terminal may not include the RSN and/or PDU Session Pair ID in the PDU Session Establishment Request message. In this case, the RSN and/or PDU Session Pair ID allocated/set by the SMF based on the DNN and S-NSSAI related to the PDU Session, the local configuration within the SMF, etc.
- Service area of the Consumer SMF
- UE location information (e.g., TAI, Cell ID, NG-RAN ID, etc.)
- Area of Interest (e.g., list of TAIs or Cell IDs or NG-RAN IDs). Area of Interest can limit the area of focus.
- Target of Analytics Reporting: a single UE (e.g., an identifier for that terminal (e.g. SUPI, etc.)), or a group of UEs (e.g. an Internal Group ID) or any UE

Step 2: To perform the requested analytics, NWDAF can subscribe to AMF. For example, NWDAF may subscribe to AMF to obtain the current location of the device from AMF and to receive notifications when the location changes due to the device's movement.

In order to obtain 'information related to Redundant PDU Session' (e.g., RSN (Requested RSN, Used RSN) and PDU Session Pair ID, information on the failure to create Redundant PDU Session, etc. The NWDAF may also obtain some or all of the information from the OAM rather than the SMF.

NWDAF may obtain packet drop rate and packet delay information measured by NG-RAN and UPF respectively for Redundant PDU Session related to a specific DNN and S-NSSAI combination through OAM and UPF.

Based on the service area sent by the Consumer SMF, the NWDAF may only reference information related to SMFs, UPFs, and NG-RANs located within its service area.

The SMF may perform operations that expose new events called "Information related to Redundant PDU Session" above, such as RSN (Requested RSN, Used RSN) and PDU Session Pair ID, information about the failure to create a Redundant PDU Session, etc. To perform these operations, the SMF may collect and store the information. Some of the information (e.g., Used RSN, Redundant PDU Session creation failure) may be provided to the SMF by the NG-RAN.

Additionally, the NWDAF may obtain from the UPF the resource status information currently allocated for the PDU Session.

Additionally, the NWDAF may receive the radio capability information of the terminal for dual connectivity from the AMF. Alternatively, the NWDAF may receive the radio capability information of the terminal for dual connectivity from the NG-RAN via OAM. Alternatively, the NWDAF may receive the radio capability information of the terminal for dual connectivity from the terminal via AF.

In addition, NWDAF may subscribe to/request information from NWDAFs that provide different Analytics IDs as needed to produce output. For example, NWDAF may receive analytics results from a NWDAF that is only responsible for a particular analytics. In another example, you may receive information related to a specific service area from a NWDAF that covers that area. The different Analytics IDs may be the various Analytics IDs defined in 3GPP TS 23.288 V17.5.0 and may include new Analytics IDs added in Rel-18.

Step 3: Based on the information obtained in Step 1 and Step 2, NWDAF can perform the analytics requested in Step 1. NWDAF can derive analytics results.

Step 4: The NWDAF may send an Nnwdaf_AnalyticsInfo_Response message or an Nnwdaf_AnalyticsSubscription_Notify message to the Consumer SMF including the Analytics results from Step 3. The Analytics results may include one or more of the following information
- Identifier for the terminal (e.g., SUPI, etc.)
- DNN and S-NSSAI for the PDU Session
- PDU Session Pair ID for the PDU Session
- Statistics values or prediction values for the RSN that can be allocated/set for the PDU Session
- Statistics values or prediction values of resource status to be allocated/set per RSN for the PDU Session. For example, the statistics values or prediction values of the resource status may be in various forms, such as an average value or a peak value or a percentage value.
- A performance (e.g., Packet delay and Packet drop rate statistics/predicted values) based on the statistics/predictions. For example, the performance may be an average value, a peak value, or a percentage value.
- The confidence and validity time of the statistics/predictions.
- The area for which the statistics/predictions are valid (e.g., SMF's service area, Area of Interest (e.g., list of TAIs or Cell IDs or NG-RAN IDs), etc.)

The NWDAF may also provide the SMF with a plurality of PDU Session Pair ID related information and/or a plurality of RSN related information for any combination of the DNN and S-NSSAI.

Analytics results provided by NWDAF are not limited to the information above. As disclosed herein, the analytics results provided by the NWDAF may include various types of information to assist the SMF in determining the appropriate RSN value for a Redundant PDU Session.

Step 5: based on the request of the NWDAF in Step 2, the AMF, SMF, UPF, OAM, and/or other NWDAFs may notify the NWDAF of any new information that has arisen or changes to the information that was transmitted in Step 2.

Step 6: In Step 1, the Consumer SMF may have requeted to be notified when Analytics changes. In this case, the NWDAF can redo the analytics for the End-to-End Redundant Transmission Experience based on the information received in Step 5.

Step 7: The NWDAF may send an Nnwdaf_AnalyticsSubscription_Notify message to the Consumer SMF including the Analytics results from Step 6.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

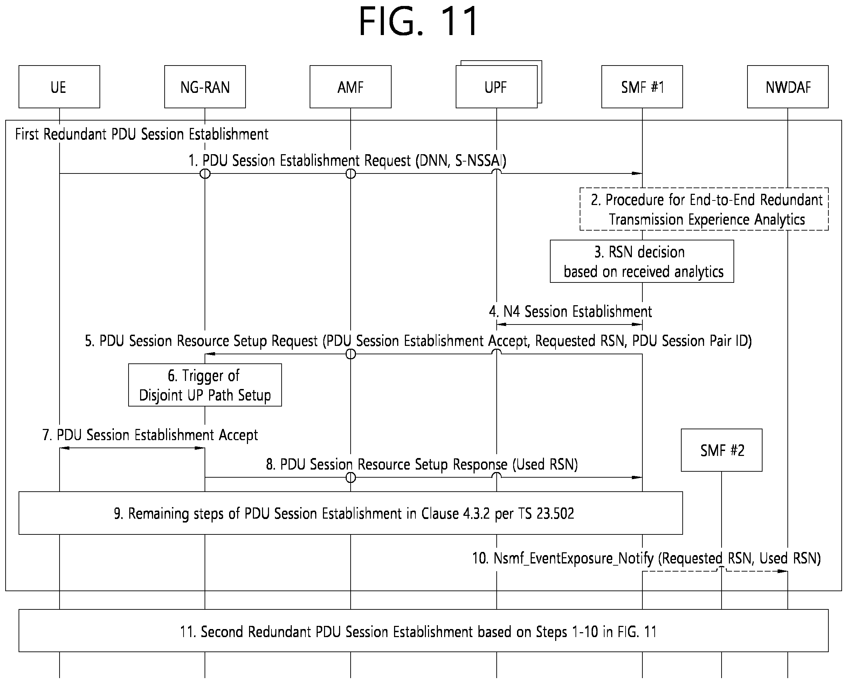

FIG. 11 illustrates a procedure according to a second example of the disclosure.

FIG. 11 includes, for example, a procedure for establishing an end-to-end redundant PDU session based on analytics from NWDAF (e.g., Procedure for Redundant PDU Session Establishment based on analytics from NWDAF).

The example in Figure 11 illustrates an example procedure for establishing a Redundant PDU Session. During this procedure, the example in FIG. 11 includes SMF #1 allocating/seting an RSN based on the End-to-End Redundant Transmission Experience Analytics results received from the NWDAF.

Note that SMF #1 and SMF #2 can be the same SMF. The UPF that created SMF #1 and the N4 Session might be the same UPF that created SMF #2 and the N4 Session, or they might be different UPFs.

Step 1: To create a new PDU Session, the terminal may send a PDU Session Establishment Request message to SMF #1, including DNN and S-NSSAI information. Based on the local configuration or UE Route Selection Policy (URSP) rules inside the terminal, the terminal may determine the RSN or PDU Session Pair ID. In this case, the terminal may include the RSN or PDU Session Pair ID in the PDU Session Establishment Request message.

Step 2: SMF #1 may request End-to-End Redundant Transmission Experience Analytics from the NWDAF as described in the example of FIG. 10. For example, to use the analytics information in the process of determining the RSN for a PDU Session related to a particular DNN and S-NSSAI combination, SMF #1 may request End-to-End Redundant Transmission Experience Analytics from the NWDAF, using the procedure illustrated in the example of FIG. 10. Step 2 may be performed prior to Step 1.

In Step 1, the terminal may not have included the PDU Session Pair ID information in the PDU Session Establishment Request message. In this case, the SMF #1 may determine the PDU Session Pair ID value for the PDU Session based on the DNN and S-NSSAI related to the PDU Session, the local configuration within the SMF, and the like. Then, the SMF #1 may send an analytics request message to the NWDAF including the PDU Session Pair ID value. If the terminal has included the PDU Session Pair ID information in the PDU Session Establishment Request message in Step 1, the process of determining the PDU Session Pair ID by the SMF may be omitted.

In addition to End-to-End Redundant Transmission Experience Analytics, SMF#1 may also subscribe/request NWDAF for other Analytics ID(s).

Step 3: The SMF #1 may determine the RSN value for the PDU Session based on any of the analytics results received from the NWDAF, the RSN or PDU Session Pair ID included in the PDU Session Establishment Request message (if the RSN or PDU Session Pair ID was received from the terminal in Step 1), the DNN and S-NSSAI related to the PDU Session, the local configuration within the SMF, etc. The SMF #1 may determine a new RSN value that is different from the RSN value sent by the terminal in Step 1 or a pre-configured RSN value for a particular DNN and S-NSSAI combination within the SMF. SMF #1 may transmit the newly determined RSN value to the NG-RAN. The SMF #1 may make this determination based on the Analytics information provided by the NWDAF for RSN determination.

Step 4: SMF #1 may create an N4 Session for UPF and the PDU Session.

Step 5: SMF #1 may send a PDU Session Resource Setup Request message to the NG-RAN via AMF. SMF #1 may use PDU Session Resource Setup Request to request resource allocation for the PDU Session from the NG-RAN via AMF. SMF #1 may also include a NAS message, e.g., PDU Session Establishment Accept message, in the PDU Session Resource Setup Request message that it sends to the terminal. At this time, SMF #1 may also convey the following information to the NG-RAN, i.e., SMF #1 may include the following information in the PDU Session Resource Setup Request message:
- The PDU Session Pair ID transmitted by the terminal in Step 1 or the PDU Session Pair ID determined by SMF #1 in Step 2; and/or
- The Requested RSN that SMF #1 determined for the PDU Session in Step 3.

Step 6: Based on the PDU Session Pair ID and RSN value received in Step 5, the NG-RAN may allocate (and/or set) a Disjoint UP path for the PDU Session.

Dual connectivity between two NG-RANs may be used to allocate/set a disjoint UP path. In this case, the NG-RAN can directly allocate/set the resources for the PDU session within the NG-RAN based on the PDU session related information received from SMF #1. Alternatively, the NG-RAN may explore the Secondary NG-RAN, select the Secondary NG-RAN, and request resource allocation/setting according to the Requested RSN value.

NG-RAN may allocate/set a disjoint UP path within a single NG-RAN instead of dual connectivity. In this case, the NG-RAN may be separated into Centralized Unit (CU) and Distributed Unit (DU), and the CU may be divided into CU-Control Plane (CP) and CU-User Plane (UP). In this case, CU-UP and DU may allocate/set resources according to the Requested RSN value. If the Disjoint UP Path cannot be allocated/set based on the Requested RSN, the NG-RAN may select an RSN value (other than the Requested RSN) (i.e., the Used RSN) for which the Disjoint UP Path can be allocated/set. For example, the NG-RAN may select an RSN value other than the Request RSN as the USed RSN.

Step 7: The NG-RAN sends a PDU Session Establishment Accept message to the terminal, along with the resource information allocated/set for the PDU session. For example, the NG-RAN may send a PDU Session Establishment Accept message to the terminal that includes the resource information allocated/set for the redundant PDU session.

Step 8: The NG-RAN may send a PDU session resource setup response message to SMF #1 via AMF. For example, the NG-RAN may inform the SMF #1 of the resource information (e.g., Used RSN information) allocated/set for the PDU Session. If, in Step 6, the NG-RAN allocates/sets a different RSN value (i.e., Used RSN) instead of the Requested RSN transmitted by the SMF #1 for the PDU Session, it may inform the SMF #1.

Step 9: The remaining actions during the PDU Session Establishment procedure may be performed according to the examples in Figures 5 and 6.

Step 10: SMF #1 may send an Nsmf_EventExposure_Notify message to the NWDAF. For example, SMF #1 may inform the NWDAF in the Nsmf_EventExposure_Notify message that for the PDU Session (e.g., a PDU Session based on a specific DNN and S-NSSAI combination), the Requested RSN determined by SMF #1 in Step 3, the Used RSN value actually allocated/set by the NG-RAN in Step 6, and the PDU Session Pair ID. For example, the SMF #1 may send an Nsmf_EventExposure_Notify message to the NWDAF including the Requested RSN determined by the SMF #1, the Used RSN value allocated/set by the NG-RAN, and the PDU Session Pair ID. In addition, SMF #1 may also transmit an identifier for the terminal (e.g., SUPI, etc.) to the NWDAF. For example, the Nsmf_EventExposure_Notify message may also include an identifier for the terminal (e.g., SUPI, etc.).

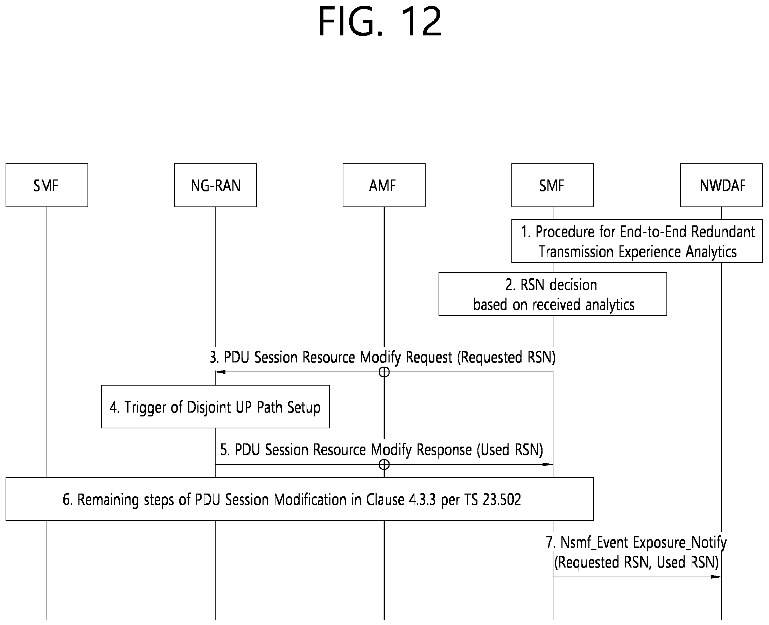

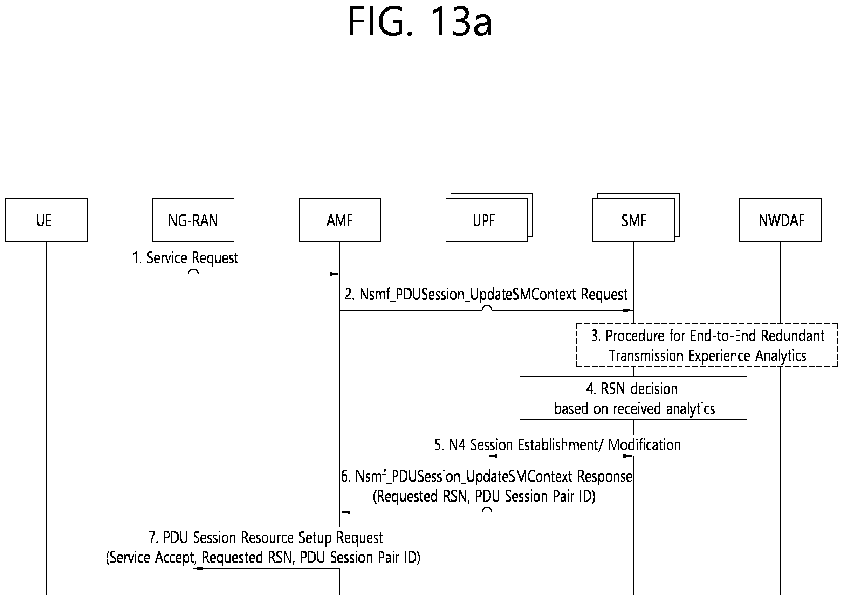

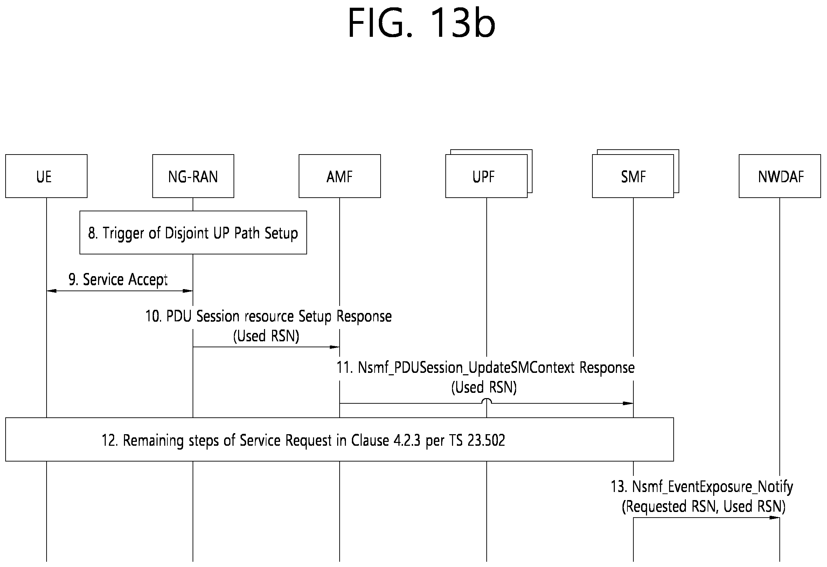

Upon receiving the Nsmf_EventExposure_Notify message, the NWDAF may determine the new analytics result value by performing new analytics according to Steps 5-7 of the example in FIG. 10. The NWDAF may then transmit the new analytics result value back to SMF #1. SMF #1 may determine a new Requested RSN value based on the new Analytics result value. For example, as illustrated in the examples of FIG. 13a and FIG. 13b, which will be discussed below, if the terminal attempts to activate the user plane of a PDU Session (with a particular DNN and S-NSSAI combination) related to redundant transmission through a service request procedure, SMF #1 may determine a new Requested RSN value based on the new Analytics result value. As another example, if a new PDU Session (of a specific DNN and S-NSSAI combination) is generated through the PDU Session Establishment procedure, as shown in the example in FIG. 11, SMF #1 may determine a new Requested RSN value based on the new Analytics result value. As another example, through the PDU Session Modification procedure, as illustrated in FIG. 12, the SMF #1 may change the RSN value currently allocated/set in the NG-RAN for the PDU Session to the new Requested RSN value based on the new Analytics result value.

Step 11: The terminal may transmit a PDU Session Establishment Request message including the DNN and S-NSSAI information to SMF #2 to further establish a second PDU session to be utilized for redundant transmission. Starting with the terminal sending the PDU Session Establishment Request message, Steps 1 to 10 of the example of FIG. 11 may be performed for the second PDU session. In this case, while the NWDAF calculates the End-to-End Redundant Transmission Experience Analytics result as in Step 2, the NWDAF may take into account the Used RSN value actually used by the NG-RAN in the process of creating the first Redundant PDU Session. As in Step 6, the NG-RAN may allocate a Disjoint UP Path based on the PDU Session related information received from SMF #2. In this case, the NG-RAN may reset/allocate the RSN value so that the two redundant PDU Sessions can form a Disjoint UP Path based on the Used RSN value configured/allocated by the NG-RAN during the process of establishing the first redundant PDU Session. For example, the NG-RAN may modify the RSN value of the first PDU Session or set the RSN value of the second PDU Session to be not the same as the RSN value of the first PDU Session.

SMFs can request/subscribe to NWDAF for analytics information for specific UEs and receive analytics information from NWDAF. In this case, the SMF may use the analytics information only to determine the RSN of the Redundant PDU Session of the the UE, or the SMF may also use the analytics information to determine the RSN of the Redundant PDU Session of another UE for the same DNN/S-NSSAI.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 12 illustrates a procedure according to a third example of the disclosure.

FIG. 12 shows an example procedure for modifying an end-to-end redundant PDU session based on analytics information from the NWDAF.

The example in FIG. 12 includes an action where the SMF receives new End-to-End Redundant Transmission Experience Analytics results from the NWDAF for a previously created Redundant PDU Session. Further, the example of FIG. 12 includes the SMF allocating/setting a new RSN value based on the new End-to-End Redundant Transmission Experience Analytics and notifying the NG-RAN.

Step 1: As shown in the example of FIG. 10, the NWDAF may receive changed information from the AMF, SMF, UPF, OAM, or another NWDAF. The changed information may be, for example, a change in a value, such as a packet drop rate/packet delay, for a PDU Session of a particular DNN, S-NSSAI combination, as measured by NG-RAN or UPF, etc. In another example, the changed information may be the results of a redundant PDU Session obtained from another SMF (e.g., the requested RSN and used RSN results for a PDU Session with a particular DNN, S-NSSAI combination, whether the disjoint UP path allocation for that PDU Session succeeded or failed, etc. Based on the changed information, the NWDAF may perform a new End-to-End Redundant Transmission Experience Analytics. The NWDAF may then transmit the analytics information to the SMF. The results of the End-to-End Redundant Transmission Experience Analytics may be delivered to all SMFs involved in the two Redundant PDU Sessions, or only to one of the SMFs involved in the two Redundant PDU Sessions.

Step 2: Based on the updated End-to-End Redundant Transmission Experience Analytics results received from the NWDAF, the SMF may redetermine the RSN value for that PDU Session. For example, based on the updated End-to-End Redundant Transmission Experience Analytics results received from the NWDAF, the Requested RSN and PDU Session Pair ID sent to the NG-RAN in the PDU Session establishment procedure, the Used RSN actually allocated/set by the NG-RAN in the PDU Session establishment procedure, the DNN and S-NSSAI related to the PDU Session, the local configuration within the SMF, etc.

Step 3: The SMF may send a PDU Session Resource Modify Request message to the NG-RAN via AMF. For example, the SMF may send a PDU Session Resource Modify Request to the NG-RAN via AMF to request the NG-RAN to change the resources for the PDU Session. At this time, the SMF may transmit the Requested RSN information that was reallocated/set for the PDU Session in Step 2, to the NG-RAN. For example, the SMF may send a PDU Session Resource Modify Request message including the reallocated/reconfigured Requested RSN information to the NG-RAN via the AMF. In addition, if a PDU Session Modification Command message needs to be delivered to the terminal, the PDU Session Resource Modify Request message may include a PDU Session Modification Command message.

Step 4: Based on the Requested RSN value received in Step 3, the NG-RAN may re-allocate/configure the Disjoint UP path for the PDU Session. If dual connectivity is utilized between two NG-RANs to allocate/set the Disjoint UP path, based on the PDU Session related information received from the SMF, the NG-RAN may directly allocate/configure resources for the PDU Session within the NG-RAN. Alternatively, in the case of utilizing dual connectivity between two NG-RANs to allocate/set a disjoint UP path, based on the PDU Session related information received from the SMF, the NG-RAN may detect the secondary NG-RAN and select the secondary NG-RAN. In this case, the RAN may request the Secondary NG-RAN to allocate/set the resource based on the Requested RSN value. In the case of allocating/setting the Disjoint UP path within a single NG-RAN rather than dual connectivity, the NG-RAN may be separated into CU and DU, and the CU may be divided into CU-CP and CU-UP. In this case, CU-UP and DU can also allocate/set resources based on the Requested RSN value. If the disjoint UP path cannot be allocated/set based on the Requested RSN, the NG-RAN may select an RSN value (other than the Requested RSN) (i.e., the Used RSN) for which the disjoint UP path can be allocated/set. For example, the NG-RAN may select an RSN value other than the Request RSN as the USed RSN.

If the NG-RAN receives a NAS message from the SMF, i.e., a PDU Session Modification Command message, that needs to be forwarded to the terminal, the NG-RAN can forward the PDU Session Modification Command message to the terminal.

Step 5: The NG-RAN may send a PDU session resource modification response message to the SMF via AMF. For example, the NG-RAN may inform the SMF of the resource information that it has changed for the PDU Session. If the NG-RAN has allocated/set a different RSN value (i.e., Used RSN) instead of the Requested RSN sent by the SMF for the PDU Session in Step 4, it may inform the SMF.

Step 6: The remainder of the PDU Session Modification procedure may be performed according to Clause 4.3.3 within 3GPP TS 23.502 V17.5.0.

Step 7: The SMF may send an Nsmf_EventExposure_Notify message to the NWDAF. For example, the SMF may inform the NWDAF, via an Nsmf_EventExposure_Notify message, the Requested RSN determined by SMF #1 in Step 3, the Used RSN value actually allocated/set by the NG-RAN in Step 6 for the PDU Session (e.g., a PDU Session based on a specific DNN and S-NSSAI combination), and the PDU Session Pair ID. In addition, the SMF may transmit an identifier for the terminal (e.g., SUPI, etc.) to the NWDAF.

Upon receiving the Nsmf_EventExposure_Notify message, the NWDAF may determine the new analytics result value by performing new analytics according to Steps 5-7 of the example in FIG. 10. The NWDAF may then transmit the new analytics result value back to SMF #1. SMF #1 may determine a new Requested RSN value based on the new Analytics result value. For example, as illustrated in the examples of FIG. 13a and FIG. 13b, which will be discussed below, if the terminal attempts to activate the user plane of a PDU Session (with a particular DNN and S-NSSAI combination) related to redundant transmission through a service request procedure, SMF #1 may determine a new Requested RSN value based on the new Analytics result value. As another example, if a new PDU Session (of a specific DNN and S-NSSAI combination) is created through the PDU Session Establishment procedure, as shown in the example in FIG. 11, SMF #1 may determine a new Requested RSN value based on the new Analytics result value. As another example, through the PDU Session Modification procedure, as illustrated in FIG. 12, the SMF #1 may change the Requested RSN value from the RSN value currently allocated/set in the NG-RAN for the PDU Session based on the new Analytics result value.

SMF may request/subscribe to NWDAF for analytics information for specific UEs and receive analytics information from NWDAF. In this case, the SMF may use the analytics information only to determine the RSN of the Redundant PDU Session of the the UE, or it may also use it to determine the RSN of the Redundant PDU Session of another UE for the same DNN/S-NSSAI.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIGS. 13a and 13b illustrate a procedure according to a fourth example of the disclosure.

The examples of FIGS. 13a and 13b include examples of service request procedure that include RSN determination operation based on analytics of the NWDAF.

For reference, the examples of FIG. 13a and FIG. 13b show one or more UPFs and one or more SMFs.

The examples of FIG. 13a and FIG. 13b include an operation in which the NG-RAN allocates/setes an RSN based on the End-to-End Redundant Transmission Experience Analytics results received by the NG-RAN from the NWDAF in the Service Request procedure of the terminal.

Step 1: The terminal (e.g. UE) can send a service request message to the AMF over the NG-RAN. For example, when the terminal receives a Paging message from the network or when the terminal has data to send to the network, the terminal may send a Service Request message over NG-RAN to the AMF.

Step 2: The AMF may send the Nsmf_PDUSession_UpdateSMContext Request message to the SMFs related to each PDU Session to activate the user plane of the PDU Session related to the terminal.

Step 3: Each SMF that receives the Nsmf_PDUSession_UpdateSMContext Request message from the AMF in Step 2, may request End-to-End Redundant Transmission Experience Analytics from the NWDAF. For example, each SMF may refer to End-to-End Redundant Transmission Experience Analytics while determining the RSN for a PDU Session related to a particular DNN and S-NSSAI combination. To reference the End-to-End Redundant Transmission Experience Analytics, each SMF may request the End-to-End Redundant Transmission Experience Analytics from the NWDAF, using the example procedure of FIG. 10. Step 3 may be performed prior to Step 1 or Step 2.

Step 4: Based on the End-to-End Redundant Transmission Experience Analytics results received from the NWDAF, each SMF can determine the RSN value for its PDU Session. For example, based on the End-to-End Redundant Transmission Experience Analytics results received from the NWDAF, the Requested RSN and PDU Session Pair ID transmitted to the NG-RAN in the PDU Session establishment procedure, the Used RSN actually allocated/set by the NG-RAN in the PDU Session establishment procedure, the DNN and S-NSSAI related to the PDU Session, the local configuration within the SMF, etc.

Step 5: Each SMF can perform the process of creating or changing the N4 Session for the UPF and the PDU Session.

Step 6: Each SMF may send an Nsmf_PDUSession_UpdateSMContext Response message to the AMF. For example, each SMF may send an Nsmf_PDUSession_UpdateSMContext Response message (including the N2 SM information to be sent to the NG-RAN) to the AMF. For example, in order to send the N2 SM information to the NG-RAN, each SMF may send an Nsmf_PDUSession_UpdateSMContext Response message to the AMF. At this time, each SMF may also include the Requested RSN value allocated/set in Step 4 in the Nsmf_PDUSession_UpdateSMContext Response message.

Step 7: The AMF may transmit the N2 SM information received from the SMF and the Service Accept message to be sent to the terminal to the NG-RAN.

Step 8: Based on the PDU Session Pair ID and RSN value received in Step 7, the NG-RAN may allocate/set the Disjoint UP path for the PDU Session.

When utilizing dual connectivity between two NG-RANs to allocate/set a disjoint UP path, based on the PDU session related information received from each SMF, the NG-RAN may directly allocate/set resources for the PDU session within the NG-RAN. Alternatively, in the case of utilizing dual connectivity between two NG-RANs to allocate/set a disjoint UP path, based on the PDU Session related information received from each SMF, the NG-RAN may explore the secondary NG-RAN and select the secondary NG-RAN. In this case, the RAN may request the Secondary NG-RAN to allocate/set the resource based on the Requested RSN value. In the case of allocating/setting the Disjoint UP path within a single NG-RAN rather than dual connectivity, the NG-RAN may be separated into CU and DU, and the CU may be divided into CU-CP and CU-UP. In this case, CU-UP and DU can also allocate/set resources based on the Requested RSN value. If the disjoint UP path cannot be allocated/set based on the Requested RSN, the NG-RAN may select an RSN value (other than the Requested RSN) (i.e., the Used RSN) for which the disjoint UP path can be allocated/set. For example, the NG-RAN may select an RSN value other than the Request RSN as the USed RSN.

Step 9: The NG-RAN sends a Service Accept message to the terminal, along with the resource information allocated/set for the PDU session.

Step 10~11: The NG-RAN may send the PDU session resource setting response message to each SMF via AMF. The NG-RAN may notify the resource information allocated/set for the PDU session to each SMF via AMF. If the NG-RAN allocates/sets a different RSN value (i.e., Used RSN) instead of the Requested RSN sent by the SMF for the PDU Session in Step 8, it may notify the SMF.

Step 12: The remaining actions during the Service Request procedure can be performed according to Clause 4.2.3 in TS 23.502.

Step 13: Each SMF may send an Nsmf_EventExposure_Notify message to the NWDAF. For example, the SMF may inform the NWDAF, via an Nsmf_EventExposure_Notify message, the Requested RSN determined by the SMF in Step 4 and the Used RSN value actually allocated/set by the NG-RAN in Step 8 for the PDU Session (e.g., a PDU Session based on a specific DNN and S-NSSAI combination), and the PDU Session Pair ID. In addition, the SMF may transmit an identifier for the terminal (e.g., SUPI, etc.) to the NWDAF.

Upon receiving the Nsmf_EventExposure_Notify message, the NWDAF may determine the new analytics result value by performing new analytics according to Steps 5 to 7 of the example in FIG. 10. The NWDAF may then send the new analytics result value back to the SMF. The SMF may determine a new Requested RSN value based on the new analytics result value. For example, as shown in the examples of FIGS. 13a and 13b, the SMF may determine a new Requested RSN value based on the new Analytics result value if the terminal intends to activate the user plane of a PDU Session (of a particular DNN and S-NSSAI combination) related to redundant transmission through a service request procedure. As another example, if a new PDU Session (with a specific DNN and S-NSSAI combination) is created through the PDU Session Establishment procedure, as shown in the example in Figure 11, the SMF may determine a new Requested RSN value based on the new Analytics result value. As another example, through the PDU Session Modification procedure, as illustrated in FIG. 12, the SMF may change the Requested RSN value from the RSN value currently allocated/set by the NG-RAN for the PDU Session based on the new Analytics result value.

SMFs can request/subscribe to NWDAF for analytics information for specific UEs and receive analytics information from NWDAF. In this case, the SMF may use the analytics information only to determine the RSN of the Redundant PDU Session of the the UE, or it may also use it to determine the RSN of the Redundant PDU Session of another UE for the same DNN/S-NSSAI.

According to various examples disclosed herein, based on analytics from the NWDAF, the SMF may appropriately set the RSN for a Redundant PDU Session. Thus, the NG-RAN receiving the RSN from the SMF may guarantee a Disjoint UP Path for the PDU Session.

The drawings can be executed individually or in conjunction with other drawings.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

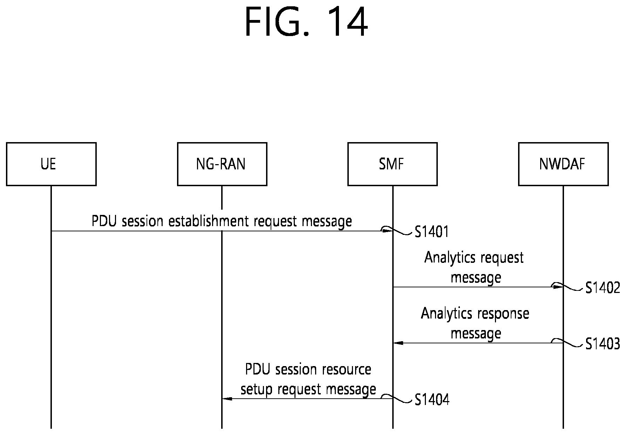

FIG. 14 illustrates an example of a procedure according to one embodiment of the disclosure.

Note that the procedures illustrated in FIG. 14 are illustrative only, and the scope of the present disclosure is not limited by the examples in FIG. 14. For example, the UE, NG-RAN, SMF, and NWDAF depicted in FIG. 14 may perform the operations described in any of the first through fourth examples of the disclosure. Of note, the AMF and UPF are not shown in the examples of FIG. 14, but this is for illustrative purposes only. For example, the AMF and UPF may perform the actions described in the various examples of the disclosure in embodiments based on FIG. 14.

For example, for the example of FIG. 14, the operations described in the examples of FIGS. 10 through 13b may also be applied. For example, any operation, content, etc. described in the various examples of the disclosure may be applied, even if the operation, content, etc. is not directly described in the example of FIG. 14.

In step S1401, the UE may send a PDU session establishment request message.

The PDU session establishment request message may include a DNN, S-NSSAI for the PDU session. Before step S1401 is performed, the UE may determine the PDU session pair ID for the redundant transmission. In this case, the PDU session establishment request message may include the PDU session pair ID. The UE may determine the PDU session pair ID based on the UE's local settings or UE Route Selection Policy (URSP) rules.

At step S1402, the SMF may send an analytics request message to the NWDAF. The analytics request message may include the DNN, the S-NSSAI, the PDU session pair ID, and the analytics ID for redundant transmission.

If the PDU session establishment request message does not include a PDU session pair ID, the SMF may determine the PDU session pair ID based on the DNN and S-NSSAI.

In step S1403, the NWDAF may send an analyze response message to the SMF. The analytics response message may include analytics information related to the RSN value. The analytic information may include, for example, various information related to redundant transmissions, as previously described in various aspects.

Based on the analyzed information, the SMF may determine the RSN value for the PDU session for redundant transmission. To assist the NG-RAN in establishing disjoint UP paths for PDU sessions for redundant transmission, the RSN value may be determined.

In step S1404, the SMF may send a PDU session resource establishment request message to the NG-RAN.

The PDU session resource establishment request message may include a requested RSN value, a PDU session establishment acceptance message, and a PDU session pair ID. The PDU session pair ID and the requested RSN value may be used by the NG-RAN to establish a disjoint UP path for the PDU session.

The SMF may receive a PDU session resource establishment response message from the NG-RAN including the Used RSN value.

The SMF may also receive updated analytics information from the NWDAF. The SMF may then update the RSN value for the PDU session based on the updated analytics information. The SMF may send a PDU session resource modification request message to the NG-RAN including the updated RSN value as the requested RSN value.

In accordance with one embodiment of the disclosure, a method is described that supports the NG-RAN to generate a disjoint UP Path for a PDU Session for Redundant Transmission. For example, the SMF may select/determine an RSN based on assistance from the NWDAF (e.g., analytics from the NWDAF). For example, the SMF may request the NWDAF to calculate/provide/perform End-to-End Redundant Transmission Experience Analytics. For example, the NWDAF may perform End-to-End Redundant Transmission Experience Analytics based on the location of the terminal, the DNN and S-NSSAI of the PDU Session, the service area of the SMF, etc. And NWDAF may transmit analytics information to SMF. Based on the End-to-End Redundant Transmission Experience Analytics received from NWDAF, SMF can allocate/set RSNs. And the SMF can forward the RSN to the NG-RAN. For example, the NG-RAN may allocate/set the Disjoint UP Path for the PDU Session based on the RSN value received from the SMF.

According to various examples of the disclosure, the disclosure can have a variety of effects. For example, a disjoint UP Path may be effectively allocated for PDU sessions for redundant transmission. For example, by ensuring a disjoint UP Path, a high reliability of the communication service may be ensured. For example, based on the analytics from the NWDAF, the SMF may appropriately set/allocate the RSN for the Redundant PDU Session. Therefore, the NG-RAN that receives the RSN from the SMF can guarantee the Disjoint UP Path for the the PDU Session.

The effects that may be derived from the specific examples of the present disclosure are not limited to those listed above. For example, there may be a variety of technical effects that a person having ordinary skill in the related art would understand or derive from the disclosure. Accordingly, the specific effects of the present disclosure are not limited to those expressly described herein, but may include a variety of effects that may be understood or induced from the technical features of the present disclosure.

For reference, the operation of the terminal (e.g., UE) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the present disclosure.

For reference, the operation of a network node (e.g., AMF, SMF, UPF, PCF, EASDF, UDM, PCF, NEF, PCF/NEF, AF, UDR, DN, NWDAF, etc.) or base station (e.g., (R)AN, NG-RAN, gNB, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication, the method performed by a Session Management Function (SMF), the method comprising:
receiving a Packet Data Unit (PDU) session establishment request message for requesting establishment of the PDU session, from a user equipment (UE),
wherein the PDU session establishment request message includes a Data Network Name (DNN) and Single Network Slice Selection Assistance Information (S-NSSAI);
transmitting an analytics request message to Network Data Analytics Function (NWDAF),
wherein the analytics request message includes the DNN, the S-NSSAI, a PDU session pair ID, and an analytics ID for redundant transmission;
receiving an analytics response message including analytics information related to a Redundancy Sequence Number (RSN) value, from the NWDAF;
determining an RSN value for the PDU session, based on the PDU session establishment request message and the analytics information; and
transmitting a PDU session resource setup request message including a PDU session establishment acceptance message, a requested RSN value, and a PDU session pair ID, to a Next-Generation Radio Access Network (NG-RAN),
wherein the requested RSN value is the determined RSN value.

2. The method of claim 1,
wherein the PDU session establishment request message further includes the PDU session pair ID determined by the UE.

3. The method of claim 1 or 2,
wherein the PDU session pair ID is determined by the SMF based on the DNN and the S-NSSAI, based on that the PDU session establishment request message does not include the PDU session pair ID.

4. The method of any one of claims 1 to 3, further comprising:
receiving a PDU session resource establishment response message including a used RSN value from the NG-RAN.

5. The method of any one of claims 1 to 4,
wherein the PDU session pair ID and the requested RSN value are used by the NG-RAN to establish a disjoint User Plane (UP) path for the PDU session.

6. The method of any one of claims 1 to 5, further comprising:
receiving updated analytics information from the NWDAF; and
updating an RSN value for the PDU session, based on the updated analytics information.

7. The method of claim 6, further comprising:
transmitting a PDU session resource modification request message including the updated RSN value as the requested RSN value to the NG-RAN.

8. A Session Management Function (SMF) for performing communication,
wherein the SMF comprising:
one or more transceivers;
one or more processors; and
one or more memory operably connectable to the one or more processor and storing instructions that, based on being executed by the at least one processor, the one or more processors adapted to perform operations comprising the method of any one of claims 1 to 7.

9. A method for performing communication, the method performed by a user equipment (UE) and comprising:
transmitting a Packet Data Unit (PDU) session establishment request message for requesting establishment of the PDU session for redundant transmission, to a Session Management Function (SMF),
wherein the PDU session establishment request message includes a Data Network Name (DNN) and Single Network Slice Selection Assistance Information (S-NSSAI); and
wherein the PDU session establishment request message is used by the SMF to request analytics related to the Redundancy Sequence Number (RSN) value from the Network Data Analytics Function (NWDAF) for the redundant transmission; and
receiving a PDU session establishment accept message from the SMF,
wherein the PDU session establishment accept message includes resource information established for the PDU session, and
wherien the resource information is based on a disjoint User Plane (UP) path for the PDU session.

10. The method of claim 9,
wherein the PDU session establishment request message further includes a PDU session pair ID.

11. The method of claim 9 or 10, further comprising:
determining the PDU session pair ID based on the UE's local configuration or UE Route Selection Policy (URSP) rule.

12. A User Equipment (UE) for performing communications, the UE comprising:
one or more transceivers;
one or more processors; and
one or more computer memory operably connectable to the one or more processor and storing instructions that, based on being executed by the at least one processor, the one or more processors adapted to perform operations comprising the method of any one of claims 9 to 11.

13. An apparatus in mobile communication comprising:
one or more transceivers;
one or more processors; and
one or more computer memory operably connectable to the one or more processor and storing instructions that, based on being executed by the at least one processor, the one or more processors adapted to perform operations comprising the method of any one of claims 9 to 11.

14. A non-transitory Computer Readable Medium (CRM) storing instructions that, based on being executed by at least one processor, perform the method of any claims 9 to 11.
